Europäisches Patentamt

European Patent Office

Office européen des brevets

(11) Publication number: **0 514 358 A2**

# EUROPEAN PATENT APPLICATION

(21) Application number: **92830221.5**

(22) Date of filing: **13.05.92**

(51) Int. Cl.5: **G05D 7/01, A61H 33/02**

(30) Priority: **15.05.91 IT VI910080**

(43) Date of publication of application:
**19.11.92 Bulletin 92/47**

(84) Designated Contracting States:
**AT BE CH DE DK ES FR GB GR LI LU MC NL PT SE**

(71) Applicant: **MERLONI TERMOSANITARI S.p.A.**
**Viale Aristide Merloni, 45**
**I-60044 Fabriano (Ancona)(IT)**

(72) Inventor: **Calearo, Giuseppe**
**Via Muzzi, 68**
**I-36050 Sovizzo (VI)(IT)**

(74) Representative: **Iannone, Carlo Luigi et al**
**Ing. Barzanò & Zanardo Roma S.p.A. Via Piemonte, 26**
**I-00187 Roma(IT)**

(54) **Control device for the adjustment members of the flowrate to the delivery nozzles in hydromassage or underwater massage installations.**

(57) The invention realizes a device for controlling the members (12) for adjustment of the flowrate of the delivery nozzles (4), which nozzles ara arranged inside an immersion tub (3) belonging to a hydromassage installation (2). Said control device (1) comprises a plurality of actuators (10), each one of said actuators acting on a flexible member (11) which is connected to a corresponding member for adjustment of the flowrate (12) wherein each one of said flexible members (11) has one of its ends (22) fastened to the actuator (10) while the opposite end is fastened to the corresponding flowrate adjustment member (12).

FIG.1

This invention relates to the realization of a control device which is particularly suitable for employment in maneuvering of the delivery nozzles flowrate adjustment members in a hydromassage installation or an underwater massage plant.

It is well known that hydromassage plants are essentially made up of an immersion tub which is provided with a plurality of delivery nozzles which are arranged inside the tub itself, said nozzles being connected by means of pipes to a distribution body which is fed by means of a pipe with water coming from the drain of the tub, said water being circulated in a closed circuit through a pump.

In some of the plants mentioned above, the delivery nozzle flowrate adjustment is carried out by maneuvering a ring nut corresponding to each nozzle, which ring nut adjusts the outlet cross-section of the delivery nozzle itself.

Such adjustment system is affected, first of all, with the drawback of forcing the person already in the tub to per form motions in an uneasy way. Indeed, as the delivery nozzles are mainly arranged on the feet side of the tub, the immersed person has to bend forward in order to adjust the flowrate of said nozzles, which is quite an uneasy task especially for old people.

Moreover, a further drawback consists in that it is difficult to control the adjustment degree of the flowrate to be performed because the delivery nozzles are arranged below the free water-surface.

In order to remove all such drawbacks, hydromassage plants have been realized in which the delivery nozzle flowrate adjustment members are inserted into the water feeding pipes from the distribution body up to the delivery nozzles themselves, and said members are fixed to the edges of the tub. Generally, such members consist of valves or of taps which are handled directly by the immersed person and which are arranged in a position sufficiently close to the person itself so as not to compel the person to perform uncomfortable motions.

Such solutions solve the problem to make the adjustment members more easily accessible to the immersed person, but they have the drawback that the builder of the plant is forced to increase the length of the pipes that feed water from the distribution body to the delivery nozzles. This causes less hygienic conditions because the longer length of the pipes makes the increase in the accumulation of polluting compounds easier, in addition to the increase in production costs.

In an attempt at removing such drawbacks, hydromassage plants have been realized, wherein the adjustment members are applied directly to the delivery connection members of the distribution body itself from which the pipes that feed the delivery nozzles depart. In one of such known solutions, for instance, the distribution body is arranged below the edge of the tub at the points corresponding to the feet side, with the adjustment members abutting with respect to the top edge of the tub itself so that they are made accessible. Any way, even such solution, which gives the advantage of the remarkable reduction in the length of the connection pipes of the distribution body with the delivery nozzles, has the drawback of compelling the person immersed to perform uncomfortable motions, because one has to bend completely forward in order to have access to the adjustment members.

This invention is inteded for removing all drawbacks mentioned above.

The main object of this invention consists in the realization of a control device of the delivery nozzle flowrate adjustment members that allows the maneuvering place of the adjustment members to be arranged at any point of the tub without requiring the lengthening of the pipes which connect the delivery nozzles to the distribution body, independently of the position where said distribution body is placed.

A further object of the present invention consists in the realization of the possibility of arranging the maneuver ing point of the adjustment members always in the most comfortable position that can be reached by the immersed person, independently of the position in which the distribution body which feeds the delivery nozzles is arranged.

Last but not least, a further object consists in the realization of the possibility of arranging the handling point of the delivery members even at a point outside the hydromassage installation, at any position selected by the user itself.

The objects disclosed above are obtained through the realization of a control device of the delivery nozzle flowrate adjustment members in a hydromassage installation, which installation comprises:

- an immersion tub which is provided with a plurality of delivery nozzles arranged inside the tub itself;
- a distribution body which is fed in a closed circuit through a pump which is connected as to the suction side to the drain of the immersion tub, said body having a plurality of delivery connection, each one being connected to a corresponding delivery nozzle through a pipe;
- a member for adjusting the nozzle delivery, said member being arranged at the points corresponding to each delivery connection of the distribution body,

said control device being characterized in that it comprises a plurality of actuators, each one acting on a flexible member connected to a corresponding member for the adjustment of the delivery, where each one of said flexible members has one of its ends fastened to said actuator, while the opposite end is fastened to the corresponding delivery adjustment member.

According to a preferred embodiment of this invention, the control device comprises a plurality of actuators, each one of said actuators being made up of a body which is fastened to the tub, in which body a screw-and-thread coupling is present, wherein an end of a flexible member consist ing of a metallic wire is fastened to the head of the screw, the opposite end of said wire being connected to the maneuvering rod of the corresponding member for the adjustment of the nozzle delivery.

The adjustment is performed by causing the screw to rotate through the action of a control rod projecting from the actuator body.

Advantageously, the control device of this invention allows the possibility of installing the actuators of the nozzle adjustment members at any position, both on the tub and at any place outside the tub itself.

Thus for instance in case the person that employs the hydromassage has particular needs, the handling points can all be put together at any position at the free will of the person in question for the most comfortable maneuvering of the adjustment members.

Under different conditions, and, for instance, when the hydromassage plant is employed for therapeutical purposes by skilled people who are carrying out the treatment on people immersed in the tub who are heavily disabled, the actuator members and then the handling or maneuvering points can be shifted to a place outside the installation itself and can be applied for instance to a control board or to a wall.

The objects and advantages disclosed above will be better put into evidence in the following, while disclosing a preferred kind of embodiment of the invention which is presented just for illustration and not for limitative purposes and is represented in the enclosed drawings, wherein:

- Figure 1 shows a schematic picture of a hydromassage plant bearing the control device of this invention;
- Figure 2 shows the longitudinal cross-section of an actuator member belonging to the control device of this invention;
- Figure 3 shows the axonometric projection of the control device of this invention which includes the actuator member and the connection flexible member, which are connected to the adjustment member applied to the distribution body.

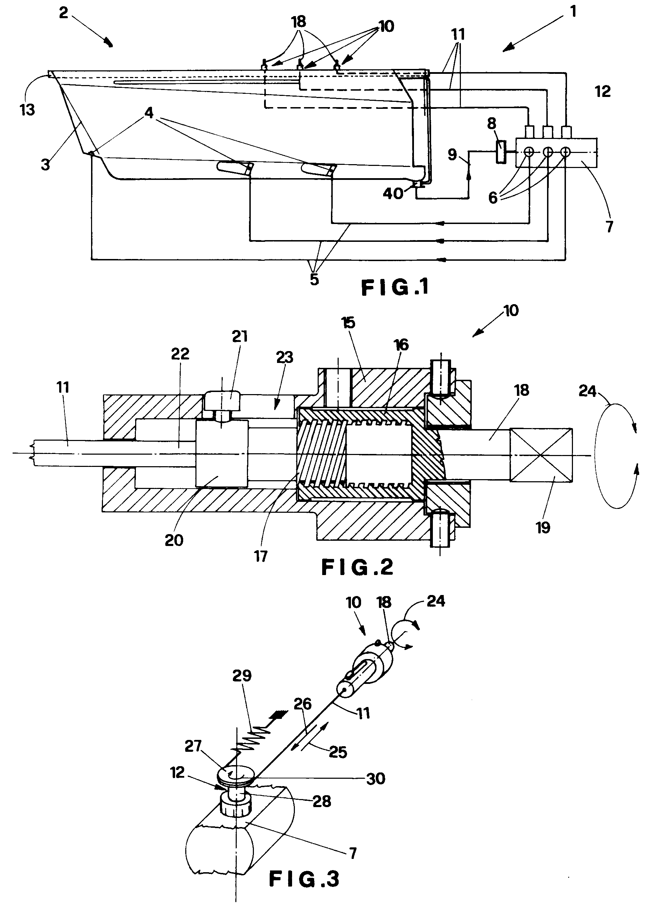

As can be seen in Figure 1, the control device of this invention, which is pointed out as a whole by the numeral 1, is represented schematically as applied to a hydromassage installation which is pointed out as a whole by the numeral 2. Said installation is made up of an immersion tub 3, which is provided with delivery nozzles 4 arranged inside the same and connected through the pipes 5 to the respective delivery connection 6 that belongs to the distribution body 7 which is fed in a closed circuit through a pump 8, whose suction side is connected through the pipe 9 to the tub drain 3. It can be observed that the control device 1 is made up of a plurality of actuator members 10, each one of said members being connected through a flexible connection member 11 to a corresponding adjustment member 12, said connection member 11 being made up of a flexible metallic wire, and said adjustment member 12 being applied to the distribution body 7 and intercepting a corresponding delivery connection 6.

Each one of the actuators 10 shown in Figure 1 is applied to the edge 13 of the immersion tub 3 and comprises a control rod 18 which projects outside the edge 13 itself so that said rod can be easily handled.

It is to be set forth precisely that this is just one of the possible installation solutions, as the actuators 10 can be fastened at any point of the immersion tub 3 and they can even be arranged outside the hydromassage installation itself and fastened, for instance, to a wall or to a possible control board of the installation. This latter solution, in particular, shows extremely interesting and useful, in case of treatment performed by skilled people of heavily disabled people who are incapable, as a consequence, of handling by themselves the control and adjustment members of the installation.

One of the actuators 10 is represented in Figure 2 as a cross-sectional view, wherein it can observed that it is made up of an outer body 15, inside which and coaxially with which a nut thread 16 is placed, said nut thread being provided with a control rod 18 projecting out of the body 15 and having a handling or maneuvering end 19. A screw 17 is coupled to said nut thread 16, said screw having a head 20, to which the end 22 of the flexible member 11 is connected by means of a locking screw 21 or an equivalente locking member, said flexible member 11 being connected to a corresponding adjustment member 12. In particular, it can be observed that locking screw 21 is housed inside a longitudinal slot 23 obtained in the body 15 od said actuator 10, so that when the tang 18 of the nut thread 16 is caused to rotate in the clockwise direction or in the anticlockwise direction as shown by the arrow 24, such slot 23 acts as a guide for the screw head 20 which slides axially inside the body 15.

Indeed, as can be observed in Figure 2, through the rotation of said nut thread 16, the axial shift of the screw 17 coupled to said nut thread is obtained, and hence the shift of the flexible cable 11 connected to the screw head 20 is also obtained. With reference how to Figure 3, it can be observed in particular that the shift of the flexible cable 11 occurs in the direction 25 or in the direction 26 according to the rotation direction 24 given to the nut thread 16 and according to the advancement direction of the helical coupling between the screw 17 and the nut thread 16.

Supposing that the shift of the flexible cable 11 occurs in the direction 25, this causes the rotation in the direction 30 of the pulley 27 for transmission of motion of the flexible cable 11, said pulley being keyed or splined on the maneuvering rod 28 of the delivery adjustment member 12. If such rotation involves the opening of the adjustment member 12, an increase in the flowrate of the nozzles 4 is obtained or, vice-versa, a flowrate reduction is obtained when such rotation involves a reduction of the same adjustment member 12. The spring 29 serves the purpose of elastically recovering the flexible cable 11 during its coming back to its starting position.

On the basis of what has been disclosed above, the very high sensitivity of the control device can be easily understood, because said actuator 10 which is provided with a screw 17-nut thread 16 system allows a very fine adjustment to be obtained of the opening of each adjustment member 12 connected to said actuator, such sensitivity being capable of modification through suitably changing the pitch of the coupling between the screw 17 and the nut thread 16.

It has been already remarked that the actuator can be placed at any point of the tub or even outside the tub itself, because the connection flexible cable 11 can be long at will and it can be bent in any suitable way.

Some changes in the realization of the control device of this invention as disclosed above could introduced when constructing the same. Thus for instance the flexible cable 11 could be made up of a plastic material or of other materials instead of consisting of metal.

Moreover, reference has been made in this disclosure to an adjustment member 12 which is made up of a tap with a rotating plug and consequently ita handling rod 28 is connected to the flexible cable 11 through a transmission pulley 27 which is provided with a spring return 29. Anyway, it is obvious that in case of employment of adjustment members of a type different from a plug cock, the connection device between the end of the flexible cable 11 and the adjustment member 12 itself can be changed.

It is to be understood that all said changes and variants are to be considered as belonging to the spirit and scope of the present invention.

## Claims

1. A control device of the memoers (12) that adjust the flowrate of the delivery nozzles (4) in a hydromassage installation (2), said device comprising:
   - an immersion tub (3) which is provided with a plurality of delivery nozzles (4) arranged inside the same;
   - a distribution body (7) which is fed in a closed cir cuit through a pump (8) connected on its suction side to the drain (40) of the immersion tub (3), which body having a plurality of delivery connections (6), each one of them being connected to a corresponding delivery nozzle (4) by means of a pipe (5);
   - a member (12) for adjustment of the flowrate of the nozzles (4), which member is arranged at the points corresponding to each delivery connection (6) of said distribution body (7);
   wherein said control device (1) is characterized in that it comprises a plurality of actuators (10) each one of them acting on a flexible member (11) which is connected to a corresponding member (12) for adjustment od the flowrate, wherein each one of said flexible members (11) has an end (22) which is fastened to said actuator (10), and the opposite end is fastened to the corresponding flowrate adjustment member (12).

2. A control device according to claim 1, which is characterized in that each actuator (10) is fastened to the edge of the tub (3) and is made up of an outer body (15) inside which a nut thread (16) is placed, said nut thread being idle with respect to the body (15) itself and project ing outside through a tang (18), a screw (17) being coupled to said nut thread, said screw having at its end a head (20) which is axially slidable inside the body (15) of the actuator, an end (22) of the corresponding connection flexible member (11) being coupled to said head.

3. A control device according to claim 2, characterized in that the head (20) of the screw (17) coupled to the nut thread (16) has a screw (21) for locking the end (22) of the felxible member (11), where said locking screw (21) slides axially inside a guiding slot (23) obtained in the body (15) of the actuator (10).

4. A control device according to claim 1, characterized in that the connection flexible member (11) is a metallic cable.

FIG.1

FIG.2

FIG.3